# EUROPEAN PATENT SPECIFICATION

(11) **EP 2 907 993 B1**
(45) Date of publication and mention of the grant of the patent: **06.11.2019**
(21) Application number: 14155097.0
(22) Date of filing: 13.02.2014
(51) Int. Cl.: F02D 41/14, F02D 41/00, F02D 41/40, F02M 21/02, F02D 19/02, F02D 35/02, F02D 37/02, F02P 5/04, F02P 5/152

(54) **Method for balancing cylinders of an internal combustion engine**
Verfahren zur Zylindergleichstellung einer Brennkraftmaschine
Procédé d'équilibrage de cylindres d'un moteur à combustion interne

(43) Date of publication of application: 19.08.2015
(73) Proprietor: Caterpillar Motoren GmbH & Co. KG, 24159 Kiel (DE)
(72) Inventor: Sixel, Eike Joachim, 24109 Kiel (DE); Lange, Hendrik Johannes, 24116 Kiel (DE); Wolfgramm, Marius, 24116 Kiel (DE)
(74) Representative: BRP Renaud & Partner mbB Rechtsanwälte Patentanwälte Steuerberater

(56) References cited:
- WO-A1-2005/088107
- WO-A1-2009/122012
- WO-A1-2012/057691
- DE-A1-102009 012 250
- DE-A1-102011 089 292
- DE-C1- 19 621 297

## Description

### Technical Field

The present disclosure generally relates to an internal combustion engine and a method of operating the same, in particular, to a method of balancing a plurality of cylinders of an internal combustion engine.

### Background

Generally, the combustion of a mixture of fuel and air in a cylinder of an Otto engine is characterized by a so-called Lambda value describing an air/fuel equivalence ratio, i.e., the ratio of the amount of air in the cylinder to the amount of air required for stoichiometric combustion.

In large gaseous fuel combustion engines, Lambda is significantly greater than 1, for example, greater than 2. Gaseous fuel combustion engines may comprise, for example, gas engines where a mixture of air and fuel is spark ignited or ignited using a pilot injection of liquid fuel such as diesel. Similarly, another gaseous fuel combustion engine may be a dual fuel engine operable in a liquid fuel mode and a gaseous fuel mode. The Lambda value of the different cylinders of such a gaseous fuel combustion engine may differ, for example, depending on various characteristics of each cylinder. During operation of the gaseous fuel combustion engine, it may therefore be desirable to balance the Lambda values of the cylinders. Various control systems and methods have been used to achieve such a balanced Lambda value for the cylinders of an internal combustion engine.

WO 2012/057691 A1 discloses a dual fuel engine comprising at least one knock sensor arranged to detect knock in each combustion chamber and to transmit an output signal proportional to the detected level of knock. If knock is detected, the amount of gaseous fuel injected will be reduced while the amount of liquid fuel will be increased.

WO 2005/088107 A1 relates to an internal combustion engine using cylinder specific knock monitoring in order to distribute the load among the cylinders of the engine.

During operation of, for example, gas engines or dual fuel engines operating in gas mode, knocking may occur when one or more pockets of air/gas mixture explode outside of the envelope of the normal combustion front in a combustion chamber of the engine. The resulting shock wave creates a characteristic metallic sound (also called "knock" or "pinging"). When knocking occurs during extended periods of time, the engine may be damaged or even destroyed. In an effort to prevent knocking from occurring, different control systems have been used.

The present disclosure is directed, at least in part, to improving or overcoming one or more aspects of prior systems.

### Summary of the Disclosure

According to one aspect of the present disclosure, a method for balancing a plurality of cylinders during gaseous fuel operation of an internal combustion engine having a plurality of gas admission valves respectively associated with one of the plurality of cylinders comprises, while operating the internal combustion engine with a first common ignition timing for each of the plurality of cylinders, a) determining a cylinder of the plurality of cylinders having an above average knock level, b) reducing an opening duration of the gas admission valve associated with the cylinder having the above-average knock level and c) repeating steps a) to b) until the knock levels for all cylinders differ from each other by less than a predetermined amount. The method further comprises advancing the first common ignition timing to a second common ignition timing for each of the plurality of cylinders when the knock levels for all cylinders differ from each other by less than the predetermined amount.

According to another aspect of the present disclosure, an internal combustion engine comprises an engine block defining at least in part a plurality of cylinders, a plurality of gas admission valves, each of the plurality of gas admission valves respectively associated with one of the plurality of cylinders, a plurality of ignition devices, each of the plurality of ignition devices respectively associated with one of the plurality of cylinders for igniting a mixture of gaseous fuel and air in the associated cylinder, a plurality of sensors, each of the plurality of sensors respectively associated with one of the plurality of cylinders, and a control unit configured to receive detection results from the plurality of sensors. The control unit is further configured to, while operating the internal combustion engine with a first common ignition timing for each of the plurality of cylinders, a) determine a cylinder of the plurality of cylinders having an above average knock level, b) reduce an opening duration of the gas admission valve associated with the cylinder having the above-average knock level and c) repeat steps a) to b) until the knock levels for all cylinders differ from each other by less than a predetermined amount. The control unit is further configured to advance the first common ignition timing to a second common ignition timing for each of the plurality of cylinders when the knock levels for all cylinders differ from each other by less than the predetermined amount.

In yet another aspect of the present disclosure, a computer program comprises computer-executable instructions which, when run on a computer, cause the computer to perform a method for balancing a plurality of cylinders during gaseous fuel operation of an internal combustion engine having a plurality of gas admission valves respectively associated with one of the plurality of cylinders. The method comprises, while operating the internal combustion engine with a first common ignition timing for each of the plurality of cylinders, a) determining a cylinder of the plurality of cylinders having an above average knock level, b) reducing an opening duration of the gas admission valve associated with the cylinder having the above-average knock level and c) repeating steps a) to b) until the knock levels for all cylinders differ from each other by less than a predetermined amount. The method further comprises advancing the first common ignition timing to a second common ignition timing for each of the plurality of cylinders when the knock levels for all cylinders differ from each other by less than the predetermined amount.

Other features and aspects of the present disclosure will be apparent from the following description and the accompanying drawings.

### Brief Description of the Drawings

Fig. 1 is a schematic view of an exemplary internal combustion engine according to the present disclosure;
Fig. 2 is a schematic view of a control system for balancing a plurality of cylinders of the internal combustion engine of Fig.1 according to the present disclosure; and
Fig. 3 is a schematic diagram illustrating knock thresholds used in an exemplary control strategy according to the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that, in a gaseous fuel combustion engine having a knock control system, the knock control system can be used to balance the Lambda values of the plurality of cylinders of the gaseous fuel combustion engine. Using, for example, the impact sound sensors of such a knock control system, the amount of knocking for each cylinder can be determined, and appropriate measures can be taken to achieve a balanced amount of knocking for each cylinder. The amount of knocking is a characteristic of the combustion in the cylinder, which characteristic may be derived from the impact sound measurements by the associated impact sound sensor, or measurements by other sensors, and may be quantified using appropriate evaluation schemes or analyzing tools. As used herein, the term "balanced" may mean that the amounts of knocking for the individual cylinders are within a predetermined range, or differ from each other by less than a predetermined value.

Further, the present disclosure may be based in part on the realization that, in order to adjust the amount of knocking for each cylinder, an opening duration of an associated gas admission valve may be adjusted to reduce or increase the amount of knocking. Therefore, the amount of knocking for each cylinder can be adjusted to an amount that results in a balancing of the amounts of knocking for all cylinders by appropriately modifying the opening duration of the associated gas admission valves.

Further, the present disclosure may be based in part on the realization that the efficiency of the gaseous fuel combustion engine can be optimized by advancing an ignition timing for each of the cylinders as far as possible while maintaining a safe operation of the engine. According to the present disclosure, the ignition timing may be advanced after the knock levels for the cylinders have been adjusted to be substantially the same. After advancing the ignition timing, the knock levels of the cylinders may be monitored and, if necessary, adjusted/balanced again, and then the ignition timing for the cylinders may be advanced further. This may be repeated several times in order to achieve a highest reachable efficiency of the associated gas combustion engine.

In addition, the present disclosure may be based in part on the realization that, when the opening duration of a gas admission valve associated with a cylinder having a relatively high knock level is reduced, the opening duration of the gas admission valves of one or more of the remaining cylinders should be increased to compensate the reduction in power of this cylinder. According to the present disclosure, this may be done by comparing the knock levels of the remaining cylinders and selecting one or more cylinders having relatively low knock levels. Alternatively or additionally, the power of the cylinders may be adjusted or balanced by adjusting the amount of air supplied to each cylinder for combustion. For example, an opening duration or timing of one or more air inlet valves may be adjusted to increase or reduce the cylinder power. In this way, substantially the same knock level for all cylinders can be achieved while at the same time balancing the cylinder powers of all cylinders.

Finally, the present disclosure may be based in part on the realization that, when the ignition timing for the cylinders of the gaseous fuel combustion engine is advanced to optimize the efficiency, a NOx emission level may be increased. Therefore, in accordance with the present disclosure, the NOx emission level is monitored, and an operating parameter of the gaseous fuel combustion engine is modified when an increase in the NOx emission level is detected. For example, an intake manifold air pressure may be increased to, for example, keep the NOx emission level constant. It should be noted that the term "ignition timing" is used for the time at which ignition of the mixture of gas and air in a cylinder is initiated, for example, the timing of the spark in case a spark plug is used or the start of injection of pilot fuel in case a pilot fuel injector is used. Further, it will be appreciated that "advancing" the ignition timing refers to shifting the ignition timing to an earlier timing.

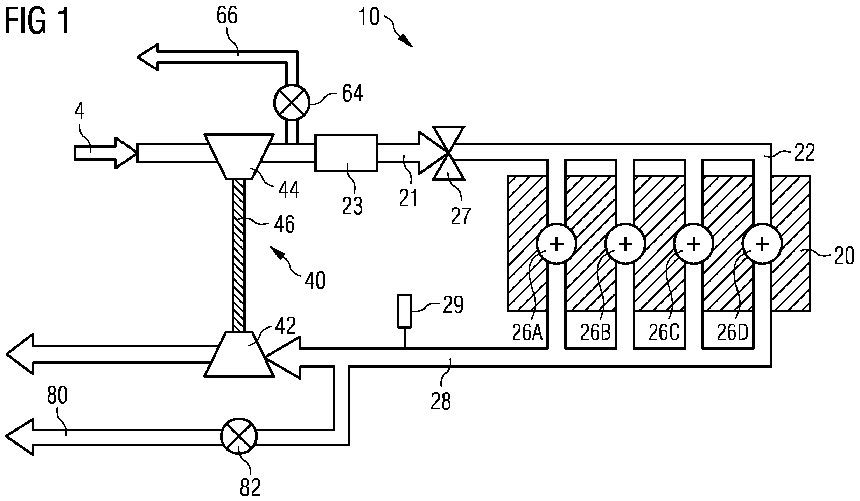

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. For the purposes of the present disclosure, internal combustion engine 10 is a gas engine. One skilled in the art will recognize, however, that internal combustion engine 10 may be any type of internal combustion engine, for example, a dual fuel engine or any other Otto engine that utilizes, at least temporarily, a mixture of gaseous fuel and air for combustion.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, at least one fuel tank (not shown), a turbocharger 40 associated with cylinders 26A-26D, and an intake manifold 22.

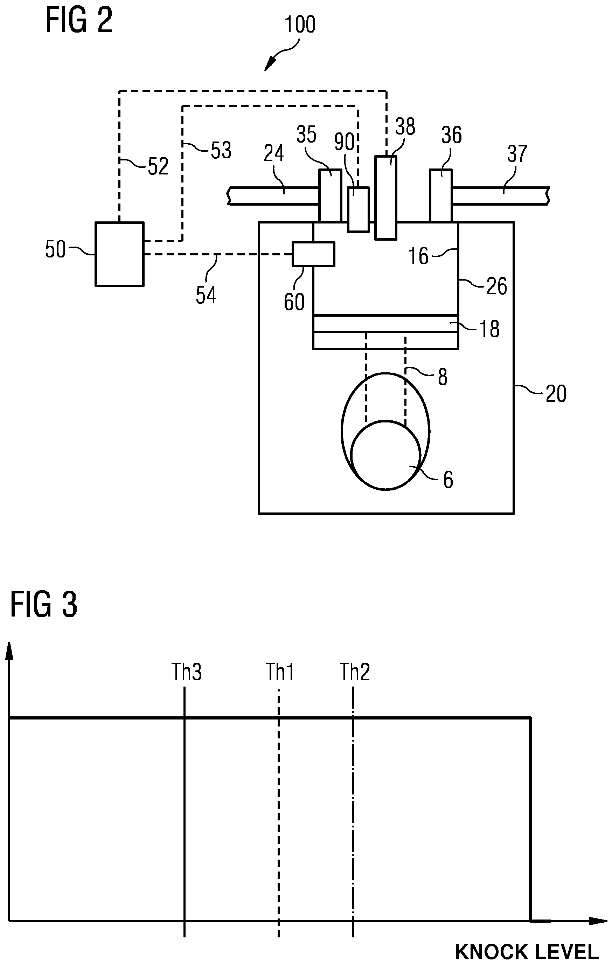

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is at least temporarily fluidly connected to each of cylinders 26A-26D. Each of cylinders 26A-26D is provided with at least one inlet valve 35 (see Fig. 2) that is adapted to open or close a fluid connection between an intake port 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated, a mixture of gaseous fuel and air (in the following referred to as the "mixture") is introduced into the combustion chambers of the plurality of cylinders 26A-26D via an air inlet 4, intake manifold 22 and inlet valves 35, which supply compressed intake air, and gas admission valves 38 (see Fig. 2), which supply gaseous fuel. After combustion, exhaust gases generated by the combustion process are released from cylinders 26A-26D through exhaust manifold 28.

An exhaust sensor 29 may be disposed in exhaust manifold 28 to detect a component of the exhaust from internal combustion engine 10. In the exemplary embodiment described herein, exhaust gas sensor may be a NOx sensor configured to detect an amount of NOx in the exhaust from internal combustion engine 10.

Turbocharger 40 is configured to use the heat and pressure of the exhaust gas of internal combustion engine 10 to drive a compressor 44 for compressing the intake air prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the compressed intake air from compressor connection 21 into intake manifold 22.

During operation of internal combustion engine 10, the intake air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, for example, by using a spark plug or a pilot injection of liquid fuel to initiate the combustion of the mixture at a predetermined ignition timing. It should be noted that herein the term "ignition timing" is used for the timing of the spark in case a spark plug is used as well as for the start of injection of the pilot fuel by the pilot fuel injector in case the latter is used for igniting the mixture for each cylinder. Further, the term "common ignition timing" indicates that the ignition in each cylinder is performed at the same timing with respect to the movement of the associated piston in each cylinder, and not that the ignition in all cylinders occurs at the same time. The produced exhaust gas is discharged via exhaust manifold 28. An outlet of exhaust manifold 28 is fluidly connected to an inlet of turbine 42. An outlet of turbine 42 may be fluidly connected to, for example, an exhaust gas treatment system (not shown).

Additionally, as indicated in Fig. 1, internal combustion engine 10 may be provided with a waste gate system including a waste gate connection 80 and a waste gate valve 82. Additionally, internal combustion engine 10 may include a blow-off system including a blow-off connection 66 and a blow-off valve 64. It should be appreciated that blow-off connection 66 and blow-off valve 64 may be provided with different configurations than the one shown in Fig. 1, if appropriate. Alternatively, one or more of these components may be omitted.

Turning now to Fig. 2, an exemplary embodiment of a control system 100 for balancing cylinders 26A-26D of gaseous fuel engine 10 is illustrated. The person skilled in the art will recognize that the exemplary cylinder 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37. A gas admission valve 38 is provided to supply gaseous fuel to combustion chamber 16 of cylinder 26. In the exemplary embodiment, gas admission valve 39 may be a solenoid-operated gas admission valve (SOGAV).

Inlet valve 35 is configured to supply compressed intake air to combustion chamber 16. Exhaust valve 36 is configured to discharge exhaust from combustion chamber 16 to exhaust manifold 28 after combustion.

An ignition device 90 is configured to ignite the mixture of gaseous fuel and air inside combustion chamber 16 at a desired ignition timing. In some embodiments, ignition device 90 may be a spark plug. In other exemplary embodiments, ignition device 90 may be a pilot injector configured to inject a pilot amount of, for example, diesel fuel to ignite the mixture. Further, in some exemplary embodiments, a pre-combustion chamber (not shown) may be provided in combustion chamber 16, and ignition device 90 may be configured to ignite a small amount of gaseous fuel supplied to the pre-combustion chamber in order to initiate combustion of gaseous fuel and air in combustion chamber 16.

Control system 100 includes a sensor 60 associated with cylinder 26. Sensor 60 may be disposed at least in part within combustion chamber 16. In other exemplary embodiments, sensor 60 may be disposed outside of combustion chamber 16. Sensor 60 is configured to detect a characteristic of the combustion in cylinder 26. In some embodiments, sensor 60 may be a pressure sensor configured to detect a cylinder pressure in cylinder 26. Sensor 60 may be any known pressure sensor and may be configured to detect the pressure within combustion chamber 16 in a known manner. In other embodiments, sensor 60 may be configured to detect temperature fluctuations within combustion chamber 16 or other characteristics from which an amount of knocking for cylinder 26 can be determined. For example, sensor 60 may be an impact sound sensor configured to detect an impact sound propagating in engine block 20 during combustion in combustion chamber 16.

Control system 100 further includes a control unit 50. Control unit 50 is connected to sensor 60 via a communication line 54 and to gas admission valve 38 via a communication line 52. Control unit 50 is further connected to ignition device 90 via a communication line 53. Control unit 50 is be configured to control an ignition timing of the mixture in combustion chamber 16 via ignition device 90. Further, control unit 50 is configured to receive the results of the detection by sensor 60 and determine at least the characteristic of the combustion in cylinder 26 from the received detection results.

Further, control unit 50 is configured to determine an amount of knocking associated with the combustion of the mixture of gas and air in combustion chamber 16 during operation of combustion engine 10 based on the detection result from sensor 60. In some embodiments, control unit 50 may be configured to record and analyze the cylinder pressure measurements by sensor 60 to determine the amount of knocking. In other embodiments, control unit 50 may determine the amount of knocking from the impact sound measurements by sensor 60 in case sensor 60 is a sound sensor.

Control unit 50 may be a single microprocessor or dual microprocessors that include means for controlling, among others, an operation of various components of combustion engine 10. Control unit 50 may be a general engine control unit (ECU) capable of controlling internal combustion engine 10 and/or its associated components. Control unit 50 may include all components required to run an application such as, for example, a memory, a secondary storage device, and a processor such as a central processing unit or any other means known in the art for controlling internal combustion engine 10 and its components. Various other known circuits may be associated with control unit 50, including power supply circuitry, signal conditioning circuitry, communication circuitry and other appropriate circuitry. Control unit 50 may analyze and compare received and stored data and, based on instructions and data stored in memory or input by a user, determine whether action is required. For example, control unit 50 may compare received values with the target values stored in memory, and, based on the results of the comparison, transmit signals to one or more components to alter the operation status of the same.

Control unit 50 may include any memory device known in the art for storing data relating to operation of internal combustion engine 10 and its components. The data may be stored in the form of one or more maps that describe and/or relate, for example, the detection results from sensor 60 to the amount of knocking for cylinder 26. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Control unit 50 may reference these maps and control operation of one component in response to the desired operation of another component. For example, the maps may contain data on the required reduction of the opening duration of gas admission valve 38 when the amount of knocking exceeds a knock threshold Th2 (see Fig. 3), or when the knock level for one cylinder 26 is higher than the knock level for the other cylinders by a predetermined amount.

In particular, control unit 50 is configured to determine a knock level for each of cylinders 26A-26D (see Fig. 1) and determine a cylinder of cylinders 26A-26D having an above-average knock level. In some exemplary embodiments, control unit 50 may be configured to compare the knock levels for cylinders 26A-26D and determine the cylinder having the highest knock level. In other embodiments, control unit 50 may determine the knock levels for all cylinders, calculate an average of the determined knock levels, and determine that a cylinder has an above average knock level when the knock level is higher than the calculated average. In other exemplary embodiments, control unit 50 may be configured to compare the knock levels of one or more cylinders 26A-26D with a first knock threshold Th1 (see Fig. 3), and determine one or more cylinders having a knock level above knock threshold Th1 as having an above-average knock level. In some embodiments, knock threshold Th1 may be lower than a second knock threshold Th2, which may be a hard limit for the amount of knocking that is allowable or acceptable for internal combustion engine 10.

In a next step, control unit 50 is configured to reduce the amount of knocking for the cylinder(s) having the above-average knock level by reducing an opening duration of gas admission valve(s) 38 associated with said cylinder(s). In this manner, the knock level of the cylinder(s) will be decreased, and will therefore be adjusted to be closer to the average knock level of the plurality of cylinders 26A-26D. In some embodiments, control unit 50 may further be configured to reduce the opening duration of the gas admission valve(s) associated with the cylinder(s) having an above-average knock level to a knock level that is below a third knock threshold Th3, which may be less than knock threshold Th1. In other embodiments, knock thresholds Th3 and Th1 may be the same.

It will be appreciated that, in order to maintain the required output of internal combustion engine 10, the opening duration of one or more gas admission valves associated with the remaining ones of cylinders 26A-26D may be increased correspondingly. For example, control unit 50 may be configured to adjust a gas admission valve 38 associated with the cylinder having the above-average knock level by using a SOGAV trim for the cylinder having the above-average knock level, and proportionally increasing one or more SOGAV opening durations for the remaining cylinders. In one example, control unit 50 may be configured to reduce the opening duration for the cylinder having the above-average knock level by, for example, 10%, and correspondingly increase the opening duration of one or more of the remaining gas admission valves by a total of 10%. Control unit 50 may be configured to select the one or more gas admission valves for which the opening duration is increased on the basis of the knock levels determined by control unit 50. In the example, control unit 50 may select the cylinder having the lowest knock level and increase the opening duration of the associated gas admission valve by 10%, or may select two cylinders having a relatively low knock level and increase the opening durations of the associated gas admission valves by 5% for each gas admission valve. It will be appreciated by the skilled person that there are many different possibilities for the selection of the gas admission valves for which the opening duration is increased and the distribution of the increase to these gas admission valves. All such possible combinations are intended to fall within the scope of the present disclosure.

Alternatively or additionally, control unit 50 may be configured to reduce the opening duration of the SOGAV of the cylinder having the above-average knock level, and then adjust the amount of charge air supplied to one or more cylinders in order to maintain the required output power while balancing the powers of the individual cylinders. For example, control unit 50 may be configured to adjust the opening duration of one or more inlet valves 35 to balance the cylinder power. In addition or as an alternative, control unit 50 may be configured to adjust one or more throttle valves (not shown) regulating an amount of air that is supplied to each cylinder.

Control unit 50 may further be configured to repeat the steps of determining the cylinder having an above-average or highest knock level and reducing an opening duration of the associated gas admission valves and, if necessary, increasing an opening duration of at least one other gas admission valve associated with at least one other cylinder or adjusting the amount of air being supplied to one or more cylinders until the knock levels for all cylinders 26A-26D differ from each other by less than a predetermined amount and, optionally, the cylinder powers of the individual cylinders are balanced, i.e., are substantially the same. The predetermined amount may be a preset amount that is obtained by experiment or during testing of internal combustion engine 10, or may be an amount that is obtained and/or can be modified during operation of combustion engine 10. In some exemplary embodiments, the predetermined amount may depend on operating parameters of combustion engine 10, for example, an engine load or the like.

By repeatedly performing the adjustment of the opening durations of the gas admission valves associated with the plurality of cylinders 26A-26D, the plurality of cylinders 26A-26D are balanced with respect to their knock level. Accordingly, it can be assumed that the plurality of cylinders 26A-26D will also be balanced with respect to other characteristics of the combustion in the corresponding combustion chamber 16, for example, their Lambda value. This balancing can be achieved by using a knock control system of combustion engine 10, which may already be installed. Therefore, no additional modifications of combustion engine 10 are necessary to implement the control method of the present disclosure in many existing combustion engine systems.

Further, control unit 50 may be operatively connected to exhaust sensor 29, and may be configured to monitor an exhaust gas parameter of internal combustion engine 10 on the basis of detection results received from exhaust sensor 29. Control unit 50 may be configured to control at least one operating parameter of internal combustion engine 10 to maintain the exhaust gas parameter at a value below a predetermined exhaust gas parameter threshold. In the exemplary embodiment described herein, the exhaust gas parameter is a NOx emission level of internal combustion engine 10, and control unit 50 is configured to increase an intake manifold air pressure in intake manifold 22 to maintain the NOx emission level of internal combustion engine 10. In the exemplary embodiment described herein, control unit 50 is configured to keep the NOx emission level of internal combustion level constant. In other exemplary embodiments, control unit 50 may be configured to keep the NOx emission level of internal combustion engine 10 below a predetermined NOx threshold. It should be appreciated, however, that in other embodiments different exhaust gas parameters may be used, and different measures may be taken to control operation of internal combustion engine 10 to maintain the exhaust gas parameter at a constant value or at a value below a predetermined threshold.

In addition, to increase the reliability of the detection of the knock levels for the plurality of cylinders 26A-26D, control unit 50 may be configured to determine the knock levels by averaging knock levels obtained over a predetermined number of combustion cycles. The average may be a running average, and the number of combustion cycles may be an appropriate number that results in the desired reliability.

In the exemplary embodiment, each sensor 60 is an impact sound sensor configured to detect an impact sound associated with the combustion in the combustion chamber 16 of associated cylinder 20. Control unit 50 is configured to determine the knock level for each of the plurality of cylinders 26A-26D on the basis of impact sound waves detected by each sensor 60. Of course, in other exemplary embodiments, sensor 60 may be a different sensor, for example, a pressure sensor disposed at least in part in combustion chamber 16 to detect a cylinder pressure, or another known sensor capable of providing a signal that can be used for determining a knock level of the associated cylinder.

Control unit 50 is further configured to operate the plurality of ignition devices 90 associated with the plurality of cylinders 26A-26D such that combustion in the combustion chamber of each cylinder is initiated with a common ignition timing for each of the plurality of cylinders. For example, a common ignition timing may be a predetermined crank angle before top dead center (TDC) for each cylinder 26. In particular, control unit 50 may be configured to operate internal combustion 10 with a first common ignition timing for each of the plurality of cylinders (26A-26D), i.e., the ignition may be initiated at the same crank angle before TDC for all cylinders, while performing the balancing of the knock levels of the plurality of cylinders 26A-26D in the above-described manner.

When the knock levels for all cylinders differ from each other by less than the predetermined amount, control unit 50 is further configured to advance the first common ignition timing to a second common ignition timing for each of the plurality of cylinders 26A-26D to increase the efficiency of internal combustion engine 10. In some embodiments, control unit 50 may advance the ignition timing by a predetermined amount. In other embodiments, control unit 50 may be configured to advance the ignition timing by an amount that depends on one or more parameters, for example, the current ignition timing, engine load or the like. Several maps relating to the advancing of the ignition timing may be stored in the memory of control unit 50.

After advancing the ignition timing, control unit 50 is further configured to again monitor and, if necessary, balance the knock levels for cylinders 26A-26D. Control unit 50 may be configured to continuously balance the knock levels for the plurality of cylinders 26A-26D. Further, control unit 50 may be configured to again advance the ignition timing from the second common ignition timing, for example, a predetermined time after advancing the ignition timing to the second common ignition timing. Control unit 50 may be configured to advance the ignition timing after balancing the knock levels for cylinders 26A-26D until the common knock level for each of the plurality of cylinders 26A-26D is within a certain range of, for example, knock threshold Th2 (see Fig. 3). In some embodiments, control unit 50 may be configured to perform the process for advancing the ignition timing at regular intervals, or upon detection of a change in an operating parameter of internal combustion engine 10, for example, a change of the temperature of the intake air supplied via intake manifold 22 or the intake manifold air pressure in intake manifold 22. Accordingly, control unit 50 may be configured to balance the optimization of the efficiency of combustion engine 10 by advancing the ignition timing with the requirement that the NOx emission level of combustion engine 10 remains below a NOx emission threshold.

It should be appreciated that, under certain circumstances, control unit 50 may be configured to retard the ignition timing for the plurality of cylinders 26A-26D, for example, when the substantially balanced knock level for the cylinders 26A-26D reaches or exceeds first or second knock threshold Th1 or Th2. Control unit 50 may be configured to reduce the knock levels for all cylinders to below a certain value, for example, first knock threshold Th1 or third knock threshold Th3, or retard the ignition timing by a predetermined amount. In this manner, safe operation of combustion engine 10 below second knock threshold Th2 may be assured.

### Industrial Applicability

The industrial applicability of the systems and methods for balancing a plurality of cylinders in a gas or dual fuel internal combustion engine described herein will be readily appreciated from the foregoing discussion. An exemplary machine suited to the disclosure is a large internal combustion engine such as the engines of the series M46DF, GCM46, GCM34, M32DF, M34DF, M3x manufactured by Caterpillar Motoren GmbH & Co. KG, Kiel, Germany. Similarly, the systems and methods described herein can be adapted to a large variety of other internal combustion engines used for various different tasks.

With the system of the present disclosure, it is possible to optimize the efficiency of an internal combustion engine during gaseous fuel operation of the same. This may be done by balancing the knock level of the individual cylinders, and thereby also balance the Lambda value associated with the same. Advantageously, this is done by making use of an already present knock control system of the internal combustion engine. For example, in a dual fuel engine having a knock control system using a plurality of cylinder pressure sensors, the detection results from these cylinder pressure sensors may be used to determine the knock levels and set a SOGAV trim on the basis of the knock levels. In other combustion engines which do not include cylinder pressure sensors, impact sound sensors associated with each cylinder of the combustion engine for detecting knocking may be used for the same purpose. In addition to balancing the knock levels, the powers of the individual cylinders may also be balanced by adjusting the amount of air being supplied to one or more cylinders.

An exemplary control in accordance with the present disclosure is described in the following.

Internal combustion engine 10 may be operated by control unit 50 with a first common ignition timing for each of the plurality of cylinders 26A-26D. First common ignition timing may be a preset default ignition timing for internal combustion engine 10, may have been set by an operator, or may have been automatically set by control unit 50 based on detected operating conditions of combustion engine 10, for example, a load of combustion engine 10 or an intake air temperature or pressure.

While internal combustion engine 10 is operating with the first common ignition timing, control unit 50 is configured to determine a cylinder of the plurality of cylinders 26A-26D having an above-average knock level, for example, having a highest knock level.

Based on the determined knock levels, control unit 50 is configured to reduce an opening duration for the gas admission valve 38 associated with the cylinder having the above-average or highest knock level (SOGAV trim). In addition, control unit 50 may be configured to correspondingly increase an opening duration of at least one other gas ignition valve 38 associated with at least one other cylinder 26A-26D to meet the power requirements for internal combustion engine 10. The adjustment of the opening durations of the gas admission valves associated with the plurality of cylinders 26A-26D will balance the knock levels for the plurality of cylinders 26A-26D. In addition or as an alternative, control unit 50 may adjust the amount of air that is supplied to the cylinder having the above-average knock level to again increase the power of the same, or adjust the amount of air that is supplied to one or more other cylinders to adjust/balance their powers.

Control unit 50 will repeatedly perform the determination of the knock levels of the cylinders and the adjustment of the opening durations of the gas admission valves until the knock levels for all cylinders are substantially the same or differ from each other by less than a predetermined amount and, optionally, the cylinder powers are also balanced. When the knock levels for all cylinders differ by less than the predetermined amount, and the common knock level is such that it is below a certain threshold, for example, second threshold Th2, control unit 50 will advance the first common ignition timing to a second common ignition timing for each of the plurality of cylinders 26A-26D to increase the efficiency of internal combustion engine 10.

Advancing the ignition timing will result in an increase in the NOx emission of internal combustion engine 10. Therefore, control unit 50 will use exhaust sensor 29 to monitor the NOx emission level, and increase the intake manifold air pressure to a value that results a NOx emission level that is kept constant or at least below a predetermined threshold.

It will be appreciated that the NOx emission control performed by control unit 50 will in turn affect the combustion in the combustion chambers of the plurality of cylinders 26A-26D, and therefore also the knock levels of the associated cylinders. However, as control unit 50 is configured to continuously monitor and adjust the knock levels of the plurality of cylinders 26A-26D, the control system of the present disclosure can react to changes in the knock levels, and therefore balance the NOx emission control with the control for optimizing the efficiency of the engine.

Control unit 50 will repeatedly perform the balancing of the knock levels for the cylinders 26A-26D and the advancing of the common ignition timing until the highest possible efficiency of combustion engine 10 is reached while maintaining the NOx emission level below a threshold.

It will be appreciated that in case the common knock level for all cylinders, or a knock level for one cylinder, exceeds a certain knock threshold, for example, knock threshold Th2, control unit 50 will retard the common ignition timing for the plurality of cylinders 26A-26D to maintain combustion engine 10 in a safe operating region where no excessive knocking will occur. It should be appreciated that various schemes can be used to maintain internal combustion engine 10 in a safe operating region. For example, one threshold may be used for the common knock level for the cylinders after balancing, and another, higher threshold may be used for knock levels of individual cylinders.

In another exemplary control strategy, control by control unit 50 may start by advancing the common ignition timing of cylinders 26A-26D without first balancing the knock levels, for example, by gradually advancing the same. This may be done until a knock level for one cylinder exceeds a predetermined threshold, for example, second threshold Th2. Then, the previously described method for balancing the knock levels may be performed, including reducing the opening duration of the cylinder having the excessive knock level. Once the knock levels of the plurality of cylinders 26A-26D are balanced, control unit may again advance the common ignition timing until knocking above the second knock threshold Th2 is again detected.

While it has been described that a common ignition timing is used for the plurality of cylinders 26A-26D, it is also contemplated that individual ignition timings may be used in the above-described balancing of the knock levels. It will be obvious to the skilled person how the exemplary method described herein can be modified in case individual ignition timings are used. For example, the knock level of each cylinder may be altered by a combination of adjusting the opening duration of the associated gas admission valve and adjusting the ignition timing for the cylinder.

In the exemplary control strategies described above, the knock levels of the individual cylinders are adjusted by adjusting an opening duration of an associated gas admission valve. It is also contemplated that in other control strategies the knock levels may be adjusted by adjusting an amount of intake air being supplied to each cylinder, in addition or as an alternative to adjusting the opening duration of the associated gas admission valve.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method for balancing a plurality of cylinders (26A-26D) during gaseous fuel operation of an internal combustion engine (10) having a plurality of gas admission valves (38) respectively associated with the plurality of cylinders (26A-26D), the method comprising:
while operating the internal combustion engine (10) with a first common ignition timing for each of the plurality of cylinders (26A-26D),
a) determining a cylinder of the plurality of cylinders (26A-26D) having an above average knock level,
b) reducing an opening duration of the gas admission valve (38) associated with the cylinder having the above average knock level, and
c) repeating steps a) to b) until the knock levels for all cylinders (26A-26D) differ from each other by less than a predetermined amount; and
when the knock levels for all cylinders (26A-26D) differ from each other by less than the predetermined amount, advancing the first common ignition timing to a second common ignition timing for each of the plurality of cylinders (26A-26D).

2. The method of claim 1, further comprising determining a cylinder of the plurality of cylinders (26A-26D) having a highest knock level in step a), and reducing an opening duration of the gas admission valve (38) associated with the cylinder having the highest knock level in step b).

3. The method of claim 1 or 2, wherein step b) further includes increasing an opening duration of at least one other gas admission valve (38) associated with at least one other cylinder (26A-26D).

4. The method of any one of claims 1 to 3, wherein step b) further includes adjusting the amount of air supplied to one or more of the plurality of cylinders (26A-26D) to adjust the power of the same.

5. The method of any one of claims 1 to 4, further comprising:
repeatedly advancing the ignition timing for each cylinder of the plurality of cylinders (26A-26D) by repeatedly performing steps a) to c) while operating the internal combustion engine (10) with a first common ignition timing, and advancing the first common ignition timing to a second common ignition timing when the knock levels for all cylinders (26A-26D) differ from each other by less than the predetermined amount.

6. The method of any one of claims 1 to 5, wherein step b) further includes reducing the opening duration of the gas admission valve (38) by such an amount that the knock level associated with the cylinder is below a first knock threshold (Th1).

7. The method of any one of claims 1 to 6, further comprising:
when one or more of the knock levels obtained in step a) exceed a second knock threshold (Th2), retarding the common ignition timing for the plurality of cylinders (26A-26D).

8. The method of any one of claims 1 to 7, further comprising:
monitoring an exhaust gas parameter of the internal combustion engine (10); and
controlling at least one operating parameter of the internal combustion engine (10) to maintain the exhaust gas parameter at a value below a predetermined exhaust gas parameter threshold.

9. The method of claim 8, further comprising controlling the at least one operating parameter of the internal combustion engine (10) to maintain a constant value of the exhaust gas parameter.

10. The method of claim 8 or 9, wherein the exhaust gas parameter is a NOx emission level of the internal combustion engine (10), and the step of controlling at least one operating parameter of the internal combustion engine (10) includes increasing an intake manifold air pressure.

11. The method of any one of claims 1 to 10, wherein step a) includes determining the knock levels of the plurality of cylinders (26A-26D) by averaging knock levels obtained over a predetermined number of combustion cycles.

12. The method of any one of claims 1 to 11, further comprising monitoring a characteristic of each of the plurality of cylinders (26A-26D) to determine the knock level for each of the plurality of cylinders (26A-26D), wherein the step of monitoring the characteristic includes at least one of detecting sound waves propagating in an engine block (20) of internal combustion engine (10) and detecting a pressure in each of the plurality of cylinders (26A-26D).

13. An internal combustion engine (10), comprising:
an engine block (20) defining at least in part a plurality of cylinders (26A-26D);
a plurality of gas admission valves (38) respectively associated with the plurality of cylinders (26A-26D);
a plurality of ignition devices (90) respectively associated with the plurality of cylinders (26A-26D) for igniting a mixture of gaseous fuel and air in the associated cylinder;
a plurality of sensors (60) respectively associated with the plurality of cylinders (26A-26D); and
a control unit (50) configured to receive detection results from the plurality of sensors (60), wherein the control unit is further configured to:
while operating the internal combustion engine (10) with a first common ignition timing for each of the plurality of cylinders (26A-26D),
a) determine a cylinder of the plurality of cylinders (26A-26D) having an above average knock level,
b) reduce an opening duration of the gas admission valve (38) associated with the cylinder having the above average knock level, and
c) repeat steps a) to b) until the knock levels for all cylinders (26A-26D) differ from each other by less than a predetermined amount; and
when the knock levels for all cylinders (26A-26D) differ from each other by less than the predetermined amount, advance the first common ignition timing to a second common ignition timing for each of the plurality of cylinders (26A-26D).

14. The internal combustion engine of claim 13, wherein the plurality of sensors (60) are at least one of impact sound sensors configured to detect an impact sound propagating in the engine block (20) and pressure sensors configured to detect a pressure in the plurality of cylinders (26A-26D).

15. A computer program comprising computer-executable instructions which, when run on a control unit according to claim 13 cause the control unit to perform the steps of the method of any one of claims 1 to 12.

## Patentansprüche

1. Verfahren zur Gleichstellung einer Vielzahl von Zylindern (26A-26D) während des Gaskraftstoffbetriebs einer Brennkraftmaschine (10) mit einer Vielzahl von Gaseinlassventilen (38), die jeweils mit der Vielzahl von Zylindern (26A-26D) verbunden sind, wobei das Verfahren umfasst:
während des Betriebs der Brennkraftmaschine (10) mit einem ersten gemeinsamen Zündzeitpunkt für jeden von der Vielzahl von Zylindern (26A-26D),
a) Bestimmen eines Zylinders aus der Vielzahl von Zylindern (26A-26D) mit einem überdurchschnittlichen Klopfpegel,
b) Reduzieren einer Öffnungsdauer des Gaseinlassventils (38), das mit dem Zylinder mit dem überdurchschnittlichen Klopfpegel verbunden ist, und
c) Wiederholen der Schritte a) bis b), bis sich die Klopfpegel für alle Zylinder (26A-26D) um weniger als einen vorbestimmten Betrag voneinander unterscheiden; und
wenn sich die Klopfpegel für alle Zylinder (26A-26D) um weniger als den vorbestimmten Betrag voneinander unterscheiden, Vorrücken des ersten gemeinsamen Zündzeitpunktes zu einem zweiten gemeinsamen Zündzeitpunkt für jeden der Vielzahl von Zylindern (26A-26D).

2. Verfahren nach Anspruch 1, ferner umfassend das Bestimmen eines Zylinders aus der Vielzahl von Zylindern (26A-26D) mit einem höchsten Klopfpegel in Schritt a) und das Reduzieren einer Öffnungsdauer des Gaseinlassventils (38), das mit dem Zylinder mit dem höchsten Klopfpegel in Schritt b) verbunden ist.

3. Verfahren nach Anspruch 1 oder 2, wobei Schritt b) ferner das Erhöhen einer Öffnungsdauer von mindestens einem anderen Gaseinlassventil (38) einschließt, das mit mindestens einem anderen Zylinder (26A-26D) verbunden ist.

4. Verfahren nach einem der Ansprüche 1 bis 3, wobei Schritt b) ferner das Einstellen der Luftmenge, die einem oder mehreren der Vielzahl von Zylindern (26A-26D) zugeführt wird, zum Einstellen der Leistung desselben einschließt.

5. Verfahren nach einem der Ansprüche 1 bis 4, ferner umfassend:
wiederholtes Vorrücken des Zündzeitpunktes für jeden Zylinder aus der Vielzahl von Zylindern (26A-26D) durch wiederholtes Ausführen der Schritte a) bis c) während des Betriebs der Brennkraftmaschine (10) mit einem ersten gemeinsamen Zündzeitpunkt und Vorrücken des ersten gemeinsamen Zündzeitpunktes auf einen zweiten gemeinsamen Zündzeitpunkt, wenn sich die Klopfpegel für alle Zylinder (26A-26D) um weniger als den vorbestimmten Betrag voneinander unterscheiden.

6. Verfahren nach einem der Ansprüche 1 zu 5, wobei Schritt b) ferner das Reduzieren der Öffnungsdauer des Gaseinlassventils (38) um einen solchen Betrag einschließt, dass der mit dem Zylinder verbundene Klopfpegel unterhalb einer ersten Klopfschwelle (Th1) liegt.

7. Verfahren nach einem der Ansprüche 1 bis 6, ferner umfassend:
wenn einer oder mehrere der in Schritt a) erhaltenen Klopfpegel eine zweite Klopfschwelle (Th2) überschreiten, Verzögern des gemeinsamen Zündzeitpunktes für die Vielzahl von Zylindern (26A-26D).

8. Verfahren nach einem der Ansprüche 1 bis 7, ferner umfassend:
Überwachen eines Abgasparameters der Brennkraftmaschine (10); und
Steuern mindestens eines Betriebsparameters der Brennkraftmaschine (10), um den Abgasparameter auf einem Wert unterhalb einer vorbestimmten Abgasparameterschwelle zu halten.

9. Verfahren nach Anspruch 8, ferner umfassend das Steuern des mindestens einen Betriebsparameters der Brennkraftmaschine (10), um einen konstanten Wert des Abgasparameters zu halten.

10. Verfahren nach Anspruch 8 oder 9, wobei der Abgasparameter ein NOx-Emissionspegel der Brennkraftmaschine (10) ist, und der Schritt des Steuerns mindestens eines Betriebsparameters der Brennkraftmaschine (10) das Erhöhen eines Saugrohrluftdrucks einschließt.

11. Verfahren nach einem der Ansprüche 1 bis 10, wobei Schritt a) das Bestimmen der Klopfpegel der Vielzahl von Zylindern (26A-26D) durch Mittelung der über eine vorbestimmte Anzahl von Verbrennungszyklen erhaltenen Klopfpegel einschließt.

12. Verfahren nach einem der Ansprüche 1 bis 11, ferner umfassend das Überwachen einer Charakteristik jedes der Vielzahl von Zylindern (26A- 26D), um den Klopfpegel für jeden der Vielzahl von Zylindern (26A-26D) zu bestimmen, wobei der Schritt des Überwachens der Charakteristik mindestens eines des Erfassens von Schallwellen, die sich in einem Motorblock (20) einer Brennkraftmaschine (10) ausbreiten und des Erfassens eines Drucks in jedem der Vielzahl von Zylindern (26A-26D) einschließt.

13. Brennkraftmaschine (10), umfassend:
einen Motorblock (20), der zumindest teilweise eine Vielzahl von Zylindern (26A-26D) definiert;
eine Vielzahl von Gaseinlassventilen (38), die jeweils mit der Vielzahl von Zylindern (26A-26D) verbunden sind;
eine Vielzahl von Zündvorrichtungen (90), die jeweils mit der Vielzahl von Zylindern (26A-26D) verbunden sind, um ein Gemisch aus gasförmigem Kraftstoff und Luft in dem zugehörigen Zylinder zu entzünden;
eine Vielzahl von Sensoren (60), die jeweils mit der Vielzahl von Zylindern (26A-26D) verbunden sind; und
eine Steuereinheit (50), die konfiguriert ist, um Erfassungsergebnisse von der Vielzahl von Sensoren (60) zu empfangen, wobei die Steuereinheit ferner konfiguriert ist, um:
während des Betriebs der Brennkraftmaschine (10) mit einem ersten gemeinsamen Zündzeitpunkt für jeden von der Vielzahl von Zylindern (26A-26D),
a) einen Zylinder aus der Vielzahl von Zylindern (26A-26D) mit einem überdurchschnittlichen Klopfpegel zu bestimmen,
b) eine Öffnungsdauer des Gaseinlassventils (38), das mit dem Zylinder mit dem überdurchschnittlichen Klopfpegel verbunden ist, zu reduzieren, und
c) die Schritte a) bis b) zu wiederholen, bis sich die Klopfpegel für alle Zylinder (26A-26D) um weniger als einen vorbestimmten Betrag voneinander unterscheiden; und
wenn sich die Klopfpegel für alle Zylinder (26A-26D) um weniger als den vorbestimmten Betrag voneinander unterscheiden, den ersten gemeinsamen Zündzeitpunkte zu einem zweiten gemeinsamen Zündzeitpunkt für jeden der Vielzahl von Zylindern (26A-26D) vorzurücken.

14. Brennkraftmaschine nach Anspruch 13, wobei die Vielzahl von Sensoren (60) mindestens einer von Trittschallsensoren ist, die konfiguriert sind, um einen sich im Motorblock (20) ausbreitenden Trittschall zu erfassen, und Drucksensoren, die konfiguriert sind, um einen Druck in der Vielzahl von Zylindern (26A-26D) zu erfassen.

15. Computerprogramm, umfassend computerausführbare Anweisungen, die, wenn sie auf einer Steuereinheit nach Anspruch 13 ausgeführt werden, bewirken, dass die Steuereinheit die Schritte des Verfahrens nach einem der Ansprüche 1 bis 12 durchführt.

## Revendications

1. Procédé d'équilibrage d'une pluralité de cylindres (26A-26D) pendant un fonctionnement par carburant gazeux d'un moteur à combustion interne (10) ayant une pluralité de soupapes d'admission de gaz (38) respectivement associées à la pluralité de cylindres (26A-26D), le procédé comprenant :
pendant le fonctionnement du moteur à combustion interne (10) avec une première séquence d'allumage commune pour chacun parmi la pluralité de cylindres (26A-26D),
a) la détermination d'un cylindre de la pluralité de cylindres (26A-26D) ayant un niveau de cliquetis supérieur à la moyenne,
b) la réduction d'une durée d'ouverture de la soupape d'admission de gaz (38) associée au cylindre ayant le niveau de cliquetis supérieur à la moyenne, et
c) la répétition des étapes a) à b) jusqu'à ce que les niveaux de cliquetis pour tous les cylindres (26A-26D) diffèrent les uns des autres de moins d'une quantité prédéterminée ; et
lorsque les niveaux de cliquetis pour tous les cylindres (26A-26D) diffèrent les uns des autres de moins de la quantité prédéterminée, l'avancement de la première séquence d'allumage commune à une deuxième séquence d'allumage commune pour chacun parmi la pluralité de cylindres (26A-26D).

2. Procédé selon la revendication 1, comprenant en outre la détermination d'un cylindre de la pluralité de cylindres (26A-26D) ayant un niveau de cliquetis le plus élevé à l'étape a), et la réduction d'une durée d'ouverture de la soupape d'admission de gaz (38) associée au cylindre ayant le niveau de cliquetis le plus élevé à l'étape b).

3. Procédé selon la revendication 1 ou 2, dans lequel l'étape b) inclut en outre l'augmentation d'une durée d'ouverture d'au moins une autre soupape d'admission de gaz (38) associée à au moins un autre cylindre (26A-26D).

4. Procédé selon l'une quelconque des revendications 1 à 3, dans lequel l'étape b) inclut en outre l'ajustement de la quantité d'air fournie à un ou plusieurs parmi la pluralité de cylindres (26A-26D) pour ajuster la puissance de ces derniers.

5. Procédé selon l'une quelconque des revendications 1 à 4, comprenant en outre :
l'avancement répété de la séquence d'allumage pour chaque cylindre de la pluralité de cylindres (26A-26D) en mettant en œuvre de manière répétée les étapes a) à c) pendant le fonctionnement du moteur à combustion interne (10) avec une première séquence d'allumage commune, et l'avancement de la première séquence d'allumage commune à une deuxième séquence d'allumage commune lorsque les niveaux de cliquetis pour tous les cylindres (26A-26D) diffèrent les uns des autres de moins de la quantité prédéterminée.

6. Procédé selon l'une quelconque des revendications 1 à 5, dans lequel l'étape b) inclut en outre la réduction de la durée d'ouverture de la soupape d'admission de gaz (38) d'une quantité telle que le niveau de cliquetis associé au cylindre est inférieur à un premier seuil de cliquetis (Th1).

7. Procédé selon l'une quelconque des revendications 1 à 6, comprenant en outre :
lorsqu'un ou plusieurs des niveaux de cliquetis obtenus à l'étape a) dépassent un deuxième seuil de cliquetis (Th2), le fait de retarder la séquence d'allumage commune pour la pluralité de cylindres (26A-26D).

8. Procédé selon l'une quelconque des revendications 1 à 7, comprenant en outre :
la surveillance d'un paramètre de gaz d'échappement du moteur à combustion interne (10) ; et
la commande d'au moins un paramètre opérationnel du moteur à combustion interne (10) pour maintenir le paramètre de gaz d'échappement à une valeur en dessous d'un seuil prédéterminé de paramètre de gaz d'échappement.

9. Procédé selon la revendication 8, comprenant en outre la commande de l'au moins un paramètre opérationnel du moteur à combustion interne (10) pour maintenir une valeur constante du paramètre de gaz d'échappement.

10. Procédé selon la revendication 8 ou 9, dans lequel le paramètre de gaz d'échappement est un niveau d'émission de NOx du moteur à combustion interne (10), et l'étape de commande d'au moins un paramètre opérationnel du moteur à combustion interne (10) inclut l'augmentation d'une pression d'air de collecteur d'admission.

11. Procédé selon l'une quelconque des revendications 1 à 10, dans lequel l'étape a) inclut la détermination des niveaux de cliquetis de la pluralité de cylindres (26A-26D) par moyennage de niveaux de cliquetis obtenus sur un nombre prédéterminé de cycles de combustion.

12. Procédé selon l'une quelconque des revendications 1 à 11, comprenant en outre la surveillance d'une caractéristique de chacun parmi la pluralité de cylindres (26A- 26D) pour déterminer le niveau de cliquetis pour chacun parmi la pluralité de cylindres (26A- 26D), dans lequel l'étape de surveillance de la caractéristique inclut au moins l'une parmi la détection d'ondes sonores se propageant dans un bloc-moteur (20) du moteur à combustion interne (10) et la détection d'une pression dans chacun parmi la pluralité de cylindres (26A-26D).

13. Moteur à combustion interne (10), comprenant :
un bloc-moteur (20) définissant au moins en partie une pluralité de cylindres (26A-26D) ;
une pluralité de soupapes d'admission de gaz (38) respectivement associées à la pluralité de cylindres (26A-26D) ;
une pluralité de dispositifs d'allumage (90) respectivement associés à la pluralité de cylindres (26A-26D) pour l'allumage d'un mélange de carburant gazeux et d'air dans le cylindre associé ;
une pluralité de capteurs (60) respectivement associés à la pluralité de cylindres (26A-26D) ; et
une unité de commande (50) configurée pour recevoir des résultats de détection de la pluralité de capteurs (60), dans lequel l'unité de commande est en outre configurée pour :
pendant le fonctionnement du moteur à combustion interne (10) avec une première séquence d'allumage commune pour chacun parmi la pluralité de cylindres (26A-26D),
a) déterminer un cylindre de la pluralité de cylindres (26A- 26D) ayant un niveau de cliquetis supérieur à la moyenne,
b) réduire une durée d'ouverture de la soupape d'admission de gaz (38) associée au cylindre ayant le niveau de cliquetis supérieur à la moyenne, et
c) répéter les étapes a) à b) jusqu'à ce que les niveaux de cliquetis pour tous les cylindres (26A-26D) diffèrent les uns des autres de moins d'une quantité prédéterminée ; et
lorsque les niveaux de cliquetis pour tous les cylindres (26A-26D) diffèrent les uns des autres de moins de la quantité prédéterminée, avancer la première séquence d'allumage commune à une deuxième séquence d'allumage commune pour chacun parmi la pluralité de cylindres (26A-26D).

14. Moteur à combustion interne selon la revendication 13, dans lequel la pluralité de capteurs (60) sont au moins l'un parmi des capteurs de son d'impact configurés pour détecter un son d'impact se propageant dans le bloc-moteur (20) et des capteurs de pression configurés pour détecter une pression dans la pluralité de cylindres (26A-26D).

15. Programme informatique comprenant des instructions exécutables par un ordinateur qui, lorsqu'elles sont exécutées sur une unité de commande selon la revendication 13 amènent l'unité de commande à mettre en œuvre les étapes du procédé selon l'une quelconque des revendications 1 à 12.
